# EUROPEAN PATENT SPECIFICATION

(11) **EP 2 788 615 B1**
(45) Date of publication and mention of the grant of the patent: **22.06.2016**
(21) Application number: 12840979.4
(22) Date of filing: 13.10.2012
(51) Int. Cl.: F03B 13/18, F04B 3/00, F04B 35/00, F04B 53/12, F03B 13/24

(54) **A POWER STATION**
KRAFTWERK
CENTRALE ÉLECTRIQUE

(30) Priority: 19.10.2011 DK 201100800
(43) Date of publication of application: 15.10.2014
(73) Proprietor: Absalonsen, Absalon, 100 Torshavn (FO)
(72) Inventor: Absalonsen, Absalon, 100 Torshavn (FO)
(74) Representative: Larsen, Hans Ole
(86) International application number: PCT/DK2012/000113
(87) International publication number: WO 2013/056711

(56) References cited:
- WO-A1-00/05501
- WO-A1-00/05501
- US-A- 1 077 509
- US-A- 1 077 509
- US-A1- 2005 169 774
- US-A1- 2005 169 774
- US-A1- 2008 260 548

## Description

### FIELD OF THE INVENTION

The present invention relates to a power station installable on a deck in an open sea, which deck is supported by a number of legs.

It is known in the art that there is a great potential in green energy, for example in sea wave power. The object of the invention is to exploit the power in sea waves.

It is known in the art that power stations installed on their platforms in the open sea for several years can withstand rough weather conditions, they are e.g. known from the off-shore-industry.

To produce electrical power by means of water or steam turbines is a well-known and efficient technical solution.

From WO00/05501 is known a system for the exploitation of wave energy, in which the system consists of a wave receiver mounted inside a channel or a wave house. Whenever the wave receiver is hit by a wave, it will be pushed inwards and in its turn force a piston inwards within cylinder housing. When the air internally of the cylinder housing reaches a predetermined pressure, a main valve will open and release a certain amount of air at a predetermined pressure. The channel/wave house has an inclination in relation to the horizontal plane, sufficient for the wave receiver to be able to return to its start position by means of gravity when the wave is receding. The system may also include another cylinder housing to adjust the distance between the piston and the rear wall of the first cylinder housing. Alternatively, or in addition to the other cylinder housing, there may be one or more third cylinder housings mounted between the wave receiver and the piston, so that the distance between the wave receiver and the piston can be adjusted. The other and third cylinder housings are to ensure adjustment of the system to different wave heights and/or different water levels.

The documents US 2005/0169774 A1 and US 2008/0260548 A1 are showing further examples of similar devices.

The power station according to the invention is driven by wave power, and the cylindrical legs of the platform comprise a part of the power stations technical equipment, in that within each of the legs is positioned a float-element, which drives a compressed air pump. The pumps are positioned on the deck of the platform, where compressed air is pumped into an air receiver from the pumps. From the air receiver air is directed via a pressure regulating valve to the compressed air generators of the power station.

The pump according to the invention, which pump is located on the deck of the platform, is a special device, since the pump comprises a vertical cylinder with two pistons, where the upper piston acts as a normal pump piston (hereafter called the piston of the pump), while the lower placed piston is designated as an adjustable bottom of the cylinder, which bottom - by means of an automatic hydraulic system - can be lifted or lowered so as to maintain at any time an optimal volume of the vertical cylinder so as to ensure the pump always has an optimal efficiency under the given circumstances such as high tide, low tide or a varying wave height of the sea.

With a fixed "normal" - and known in the art - bottom of the cylinder, air compression and efficiency of the cylinder depend strongly in relation to high tide or low tide or varying wave heights of the sea.

According to the invention, in the adjustable bottom of the cylinder is mounted an ingoing and outgoing non-return valve. Between the outgoing non-return valve and a compressed air pipe, which leads to an air receiver, is mounted a compressed air tube with the necessary length so as to give the adjustable bottom of the cylinder the necessary freedom of movement up and down.

Aspects of the invention will be apparent from and elucidated with reference to the embodiments described hereinafter.

### BRIEF DESCRIPTION OF THE DRAWINGS

The present invention is further described in more detail with reference to the accompanying drawings, in which:
Fig. 1 is a power station installed in the open sea.
Fig. 2 illustrates a view of the pump according to the invention.
Fig. 3 illustrates a view of the pump according to the invention with a sensor and a hydraulic regulation of an adjustable bottom of the pumps cylinder.

### DETAILED DESCRIPTION

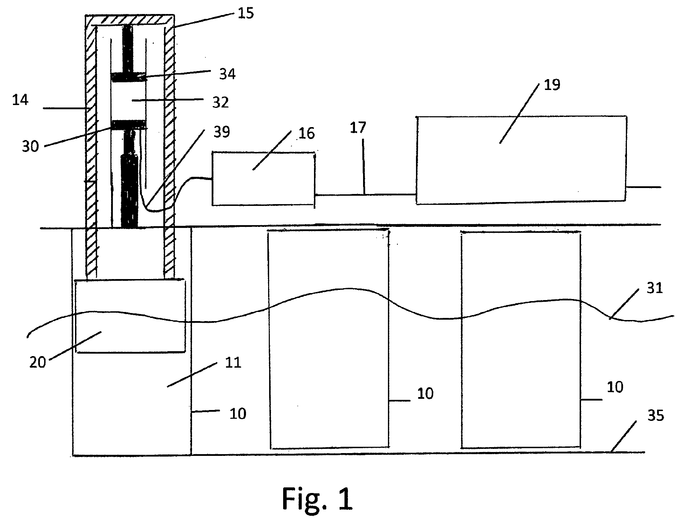

The present invention will now be described in further details with reference to Figs. 1-3. Throughout the below description and in the drawings, identical components or elements present in different figures of the drawings are designated the same reference numerals.

Fig. 1 is a power station installed in the open sea. The power station 19 is supported by a number of cylinders/legs 10, which are a part of the construction of the power station. The cylinders/legs 10 support and carry the deck of the platform, and are at the same time housing for a pumping arrangement of the present invention.

A depth of the sea at minimum 20 meters is a requirement, and there should be a possibility to direct high power to the land either as a high power voltage cable to the coast on the sea bottom or as a high power voltage cable directed through air.

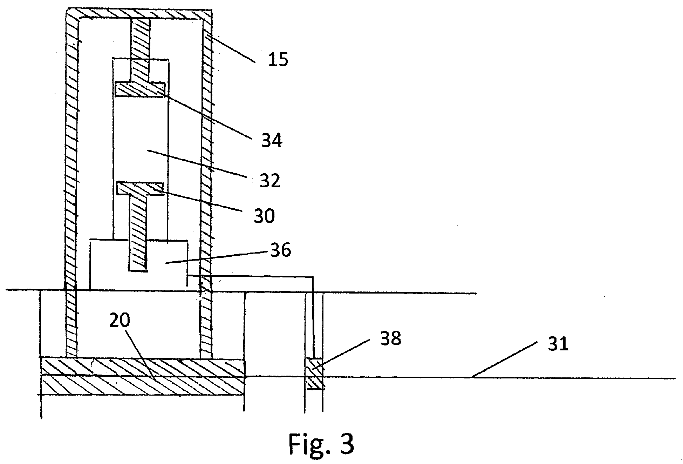

Each of the pumps of the station can be explained as follows: A big cylinder, see fig. 3 reference 32, is placed vertically on the bottom of the sea 35, and the upper edge of the big cylinder shall be at a level, which the waves of the sea under no circumstances will reach. The cross-sectional area of the cylinder is e.g. 10 m².

Below and over the surface of the sea the sides of the cylinder 32 are provided with a necessary number of openings so as to allow air and water freely to pass in and out of the cylinder 32.

Inside the vertically placed and fixed cylinder 11 is positioned a float element 20 comprising a cylinder with nearly the same diameter as that of the fixed cylinder, i.e. the float element 20 has a cross-sectional area of nearly 10 m².

The float element 20 should have a weight of minimum 20000 kg and a height of approximately 5 meters, i.e. the volume of the float element 20 is in an exemplary embodiment of the invention approximately 50 m³. The float element 20 should be able to freely move up and down inside the vertical cylinder 11.

On the deck of the platform over each of the vertical cylinders 11, which constitute the legs 10 of the platform is installed a special piston-pressure pump comprising a vertical cylinder 32. The cylinder 32 is provided with two pistons, an upper piston 34, and where the lower positioned piston constitutes an adjustable bottom, see fig. 1 and 3 with reference 30, of the cylinder, reference 32.

The piston of the pump of the float element 20 is driven by the following technical solution: On the top of the float element 20 is mounted a strong A-Frame 14, which is explained as a huge vertical two legged boom 15, which even at the lowest low tide and with the float element 20 in the deepest valley of a sea wave must be positioned substantial higher over the upper edge of the pumping cylinder, see fig. 3 reference 32. The two legs of the A-frame 14 (boom) are positioned diametral in relation to one another with a sufficient distance between the two legs so as to allow that the two legs can move up and down outside the outer side of the pumping cylinder, see fig. 3 reference 32. The connection rod of the pumping piston is mounted to the transverse beam 15 of the A-Frame 14. This has the effect that the piston 34 of the pump follows the up and down going movements of the float element 20. The adjustable bottom, see fig. 3 reference 30, of the cylinder can be moved up and down, this movement is required so as to maintain the necessary volume of the cylinder 32 and thereby the necessary compression of the air as a consequence of high and low tide as well as varying wave heights.

With the hydraulic, see fig. 3 reference 36, regulation of the bottom 30 of the cylinder the maximum capacity of the pump will be reached, and likewise thereby with the aid of a build in automatic measure of precaution be able to lower the bottom 30 of the cylinder to avoid that the upper piston 34 and the bottom 30 of the cylinder touches one another.

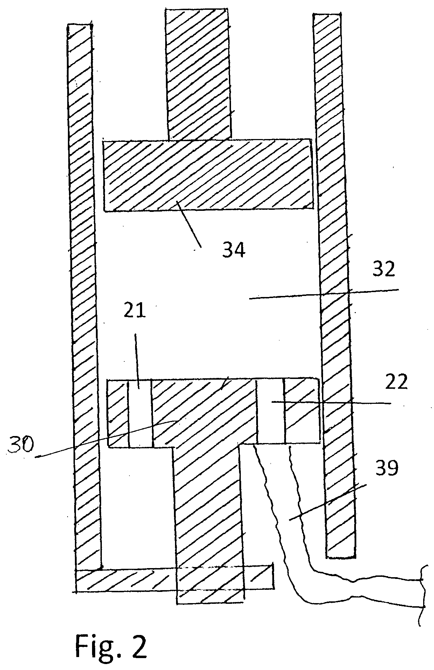

In the bottom of the cylinder are mounted, see fig. 2 references 21 and 22, two no return valves, one no return valve 21 for incoming air and the other no return valve 22 for outgoing air.

The control of the hydraulic system, which regulates the adjustable bottom, see fig. 3 reference 30, of the cylinder, is automated and is controlled by a floating sensor, see fig. 3 reference 38, which sensor is positioned in a vertical pipe, which is open at it two ends, and where the lower end is positioned well below the level of the sea, see fig. 1 and fig. 3 reference 31. The system is programmed to adjust the position of the adjustable bottom, see fig. 3 reference 30, of the cylinder 32 after need and within a given tolerance.

Apart from the automatic adjustment system there is a build in measure of precaution in the form of a security valve of the hydraulic system. The valve opens automatic and the adjustable bottom, see fig. 3 reference 30, of the cylinder is lowered down if the distance between the piston and the adjustable bottom of the cylinder reaches a critical minimum distance. The outgoing no return valve 22 in the adjustable bottom, see fig. 3 reference 30, of the cylinder 32 is connected to a compressed air tube 39, which tube is connected to a compressed air pipe, which leads to an air receiver, see fig. 1 reference 16, of the power station 19. From the air receiver, see fig. 1 reference 16, the air is led via an air regulating valve/air reduction valve, see fig. 1 reference 17, to the power station, see fig. 1 reference 19, where one or more pressured air turbines drive electrical generators.

The air regulating valve/air reduction valve, see fig. 1 reference 17 ensures that the one or more pressured air turbines is/are run with a stable air pressure and will therefore produce alternating current with a stable voltage.

The air receiver, see fig. 1 reference 16, is provided with a safety valve, which safety valve opens if the air pressure - of the safety valve - is higher that the pre-set air pressure of the air regulating valve in fig. 1 reference 17.

During weather conditions with high waves of the sea it is the case that there will be pumped more pressurised air in the tank (air receiver) than the pressured air turbines can accommodate and use, and therefore the safety valve will open, but instead of letting the pumped pressurised air out of the system, the air can be stored in an additional air receiver from which it can be used in the pressured air turbines later.

As regards the construction of the system one need to calculate with a platform, which is supported and carried by more legs, see fig. 1 reference 10, which legs mutually support one another to be able to resist - during extreme weather conditions - the lateral going pressure from storm and sea waves on the platform. Since each leg, see fig. 1 reference 10, according to the invention is provided with the float element 20 and the pumping cylinder, see fig. 3 reference 32, etc. it is evident that the production capacity of the power station 19 is increased when more legs 10 with a corresponding float element 20 and pumping cylinder are applied.

When a top of a sea wave has passed on of the legs of the platform and the surface of the sea will sink, and the float element 20 into the cylindrical shaped leg 10 hereby will move downward, the same downward movement will be performed by the piston, see reference 34 in figure 1 and 3, of the pump. Accordingly the air pressure inside the pumps vertical cylinder, see fig. 3 reference 32, will increase and the piston will hinder any downward movement of the float element 20, whereby more of the volume of the float element 20 will be over the level of the sea, see figs. 1 and 3 by reference 31. Every time 1 m³ of the volume of the float element 20 comes over the level, the pressure on the piston, see reference 34 in figure 3 is increased with one ton.

For example if the areal of the piston is 1000 cm² and the height of the sea wave is 2 meters there will as a starting point be pressed 200 litres of compressed air into the air receiver, see fig. 1 reference 16, of the power station each time the piston goes downward. At a 2 meters sea wave height, it is expected to have wave periods of 6 seconds, which are 10 pumping strokes of the piston every minute.

As soon as a trough of the waves has passed the platform, the float element 20 is lifted and the no return valve for outgoing air in the bottom of the cylinder will shut off, and the cylinder 32 will be refilled with air by means of the no return valve for incoming air and the up wards going stroke of the piston 34. In this way the air pressure in the air receiver gradually increases. At the point where the air pressure has reached ten bars the pressure on the piston 34 has to be 10 ton to be able to open up the no return valve for outgoing air, that is more than 10 m³ of the float element 20 must be positioned over the sea level 31 as compared to the starting position, which means that the height of the sea wave must be at least 1 meter in order to that a pump of such dimension will start to operate, when it is set as a prerequisite that there is a pressure of 10 bars in the air receiver.

It has to be noted that a sea wave height below one meter is rather seldom on the open sea. A normal sea wave height is regarded to be within 2 and 3 meters, a sea wave height on 10 meters and more is an extreme weather condition.

The vertical cylinder of the pump is required to have a considerable height and position over the sea level 31 to take into account the level of the sea as regards high tide or low tide on a local position and as regards a varying height of the sea wave.

A fixed bottom of a cylinder, contrary to that of the invention, will at high tide give a distance between the bottom of the cylinder and the piston, which distance is several meters more than the distance at low tide and thereby a lower capacity of such a pump. In order to be able to achieve the same compression of air in the pump at low tide and at high tide an adjustable bottom of the cylinder of the pump is required according to the invention. The adjustable bottom of the cylinder of the pump is also a necessity since at one moment there is a height of the wave of for example 2 meters and at another moment the height of the wave is for example 5 meters. Since non normal waves may be the case where the platform is positioned at the sea it is required to build in a measure of precaution, which hinders that the piston of the pump hits the bottom of the cylinder.

The person skilled in the art realizes that the present invention by no means is limited to the embodiments described above. On the contrary, many modifications and variations are possible within the scope of the appended claim.

The invention can be realised, and it is believed that the power station of the invention will work, when made. It may be the case that thorough and qualified computations need be done, and possibly models need be made and tested in a test basin or test dock to find out how much energy and power, which can be produced in relation to the price and costs of the power station. The idea of the invention could well be an interesting topic or theme for research and development, and likely many options are available for financial support in relation to research and development of alternative energy supply.

Sustainable "green" sources of energy - without the emission of CO₂ - has a great international focus at the time being. Many governments do invest large sums of money into research and development of alternative energy sources.

It is believed that the present invention is found appealing and interesting, and that fine possibilities exist to finance the research and development of the possibilities the present invention opens up for.

## Claims

1. A power station (19) installable on a deck in an open sea, which deck is supported by a number of legs (10), each of the number of legs (10) comprising a float element (20) driving a piston-pressure pump (30, 32, 34), the piston-pressure pump (30, 32, 34) comprising a vertical cylinder (32), the vertical cylinder (32) comprising an upper piston (34) and a lower positioned piston defining an adjustable bottom (30) of the vertical cylinder (32), in the adjustable bottom (30) of the vertical cylinder (32) being mounted a no return valve (21) for incoming air and a no return valve (22) for outgoing air, between the no return valve (22) for outgoing air and a compressed air pipe, which leads to an air receiver (16), is mounted a compressed air tube (39) with the necessary length to give the adjustable bottom (30) of the vertical cylinder (32) the necessary freedom for its up and down movement, **characterized in that** the position of the bottom (30) is regulated by a hydraulic system (36) which is controlled by a floating sensor (38) floating in the sea (31).

2. A power station according to claim 1, **characterized in that** hydraulic system (36) includes a security valve to lower the bottom (30) when the distance to the upper piston (34) reaches a minimum distance.

## Patentansprüche

1. Kraftwerk (19), das an einem Deck im offenen Meer angeordnet werden kann, welches Deck von einer Reihe von Schenkeln (10) gestützt wird, wobei jeder der Reihe von Schenkeln (10) ein eine Kolbendruckpumpe (30, 32, 34) treibendes Schwimmelement (20) umfasst, wobei die Kolbendruckpumpe (30, 32, 34) einen vertikalen Zylinder (32) umfasst, wobei der vertikale Zylinder (32) einen oberen Kolben (34) und einen einen verstellbaren Boden (30) des vertikalen Zylinders (32) abgrenzenden niederiger angeordneten Kolben umfast, wobei im verstellbaren Boden (30) des vertikalen Zylinders (32) ein Rückschlagventil (21) für eintretende Luft und ein Rückschlagventil (22) für austretende Luft montiert sind, wobei zwischen dem Rückschlagventil (22) für austretende Luft und einer zu einer Luftaufnahmeeinrichtung (16) führenden Druckluftleitung ein Druckluftschlauch (39) der erforderlichen Länge montiert ist, um dem verstellbaren Boden (30) des vertikalen Zylinders (32) für seine Auf- und Abwärtsbewegung die erforderliche Freiheit zu gewähren, **dadurch gekennzeichnet, dass** die Position des Bodens (30) durch ein hydraulisches System (36) reguliert wird, das von einem im Meer (31) schwimmenden Schwimmsensor (38) gesteuert wird.

2. Kraftwerk nach Anspruch 1, **dadurch gekennzeichnet, dass** das hydraulische System (36) zum Absenken des Bodens (30), wenn der Abstand zum oberen Kolben (34) einen Mindestabstand erreicht, ein Sicherheitsventil beinhaltet.

## Revendications

1. Centrale électrique (19) apte à être installée sur un pont en pleine mer, lequel pont est supporté par un ensemble de jambes (10), chacune de la pluralité de jambes (10) comprenant un élément flottant (20) entraînant une pompe de pression à piston (30, 32, 34), la pompe de pression à piston (30, 32, 34) comprenant un cylindre vertical (32), le cylindre vertical (32) comprenant un piston supérieur (34) et un piston positionné plus bas définissant un fond réglable (30) du cylindre vertical (32), dans le fond réglable (30) du cylindre vertical (32) étant monté un clapet anti-retour (21) pour de l'air entrant et un clapet anti-retour (22) pour de l'air sortant, entre le clapet anti-retour (22) pour l'air sortant et un tuyau d'air comprimé, qui conduit à un récepteur d'air (16), est monté un tube d'air comprimé (39) avec la longueur nécessaire pour donner au fond réglable (30) du cylindre vertical (32) la liberté nécessaire pour son mouvement de montée et de descente, **caractérisée en ce que** la position du fond (30) est régulée par un système hydraulique (36) qui est commandé par un capteur flottant (38) flottant dans la mer (31).

2. Centrale électrique selon la revendication 1, **caractérisée en ce que** le système hydraulique (36) inclut une soupape de sécurité pour abaisser le fond (30) lorsque la distance jusqu'au piston supérieur (34) atteint une distance minimale.
